# EUROPÄISCHE PATENTSCHRIFT

(11) **EP 0 560 120 B1**
(45) Veröffentlichungstag und Bekanntmachung des Hinweises auf die Patenterteilung: **28.08.2002**
(21) Anmeldenummer: 93102836.9
(22) Anmeldetag: 24.02.1993
(51) Int. Cl.: H04M 11/02, H04M 1/58

(54) **Türsprechanlage**
Door telephone
Interphone

(30) Priorität: 13.03.1992 DE 4207995
(43) Veröffentlichungstag der Anmeldung: 15.09.1993
(73) Patentinhaber: Ritto - Werk Loh GmbH & Co. KG, D-35708 Haiger (DE)
(72) Erfinder: Achenbach, Heinz, W-3565 Breidenbach 4 (DE)
(74) Vertreter: Jeck, Anton, Dipl.-Ing.

(56) Entgegenhaltungen:
- DE-A- 3 910 879
- DE-C- 3 804 552
- US-A- 4 588 859
- US-A- 4 691 348
- US-A- 4 700 382
- FUNKSCHAU, Bd.49, Nr.4, Februar 1977, MUNCHEN DE Seiten 180 - 181 H. TUSCHMANN 'Rückkopplungsfreie Tür-Freisprecheinrichtung'

## Beschreibung

Die Erfindung betrifft eine Türsprechanlage mit einer einen Empfangs- und einen Sendekreis aufweisenden Türstation und mindestens einer mit einem Sende- und Empfangskreis versehenen Wohntelefon, bei der eine Sprechverbindung zwischen der Türstation und dem Wohntelefon sowie von dem Wohntelefon zur Türstation über eine gemeinsame Bezugsader (Erde) und eine Sprechader geführt ist, bei der die von den Sendekreisen der Türstation und dem Wohntelefon ausgehenden Sprechströme mittels einer Verstärkerschaltung mit zwei Richtungsverstärkern verstärkt werden, und bei der die Verstärkerschaltung zwei Kompensationsverstärker aufweist, deren Eingänge mit dem Sprechkreis der Türstation bzw. dem Sprechkreis des Wohntelefons in Verbindung stehen und die um 180° phasenverschobene Ausgangsspannungen einem Spannungsteiler zuführen, an dem eine Kompensation der von dem Wohntelefon rückgekoppelten Spannungen für den Empfangskreis der Türstation vorgenommen wird.

Eine derartige Türsprechanlage ist aus der DE 38 04 552 C1 bekannt. Bei dieser bekannten Türsprechanlage sind beide Übertragungsrichtungen von dem Wohntelefon zur Türstation und von der Türstation zum Wohntelefon dauernd durchgeschaltet. Um den immer mehr oder weniger großen Anteil der Sprechsignale der einen Übertragungsrichtung, die auf die jeweils andere Übertragungsrichtung zurückgekoppelt werden, zu reduzieren, ist die gegenphasige Kompensation mit Hilfe der beiden Kompensationsverstärker vorgesehen.

Diese Kompensationsmethode der rückgekoppelten Sprachsignale hat seine Grenzen, da der Phasenverlauf zwischen den beiden zur Kompensation verwendeten Signale nie identisch ist. Daher wird keine 100 %-ige Auslöschung der rückgekoppelten Signale erreicht, sondern vielleicht nur eine 98 %-ige. Bei entsprechend großen Lautstärken setzt daher auch bei dieser bekannten Türsprechanlage eine Rückkopplung ein.

Es ist Aufgabe der Erfindung, bei einer Türsprechanlage der eingangs erwähnten Art die durch die unvollkommene Kompensation der rückgekoppelten Signale bestehende Neigung zur Rückkopplung zu unterbinden.

Diese Aufgabe wird nach der Erfindung dadurch gelöst, daß in der Ausgangsstellung der Türsprechanlage beide Richtungsverstärker auf Verstärkung Null eingestellt sind, daß beim Sprechen an dem Wohnungstelefon eine Steuerschaltung unabhängig vom Anstehen einer vom Sendekreis der Türstation kommenden Sprechspannung den zur Türstation gerichteten Richtungsverstärker auf volle Verstärkung und den zum Wohntelefon gerichteten Richtungsverstärker auf eine reduzierte Verstärkung einstellt und daß die Steuerschaltung nur bei fehlender, vom Sendekreis des Wohntelefons kommender Sprechspannung und beim gleichzeitigen Anstehen einer vom Sendekreis der Türstation kommenden Sprechspannung den zum Wohntelefon gerichteten Richtungsverstärker auf volle Verstärkung und den zur Türstation gerichteten Richtungsverstärker auf eine reduzierte Verstärkung einstellt.

Im Ruhezustand haben beide Richtungsverstärker die Verstärkung Null, so daß eine ausreichende Sicherheit gegen Rückkopplung gegeben ist. Die beiden Kompensationsverstärker wirken in der gleichen Weise wie bei der bekannten Türsprechanlage. Die erhöhte Sicherheit gegen Rückkopplung wird durch eine zusätzliche richtungsabhängige Veränderung der Verstärkungen der Richtungsverstärker erreicht, wobei der Übertragungsrichtung vom Wohntelefon zur Türstation die Priorität eingeräumt ist. Der Richtungsverstärker in der gerade benutzten Übertragungsrichtung wird dabei auf volle Verstärkung gesteuert, um eine ausreichende Lautstärke zu erhalten. Der Richtungsverstärker in der jeweils entgegengesetzten Übertragungsrichtung wird auf eine reduzierte Verstärkung hochgesteuert, so daß auch in dieser Übertragungsrichtung eine, wenn auch schlechtere Verbindung besteht. Dabei ist aber ein rückkopplungsfreier Betrieb der Türsprechanlage in beiden Übertragungsrichtungen garantiert und eine Art Gegensprechbetrieb beibehalten.

Die Ankopplung der Kompensationsverstärker ist dabei so vorgenommen, daß der Ausgang des mit dem Sendekreis der Türstation verbundenen Richtungsverstärker über einen Begrenzer, einen Tiefpaß und einen Verstärker mit einer Wicklung eines Übertragers verbunden ist, deren anderes Ende mit dem Eingang des mit dem Sendekreis der Türstation in Verbindung stehenden Kompensationsverstärkers und einem am Bezugspotential liegenden Widerstands verbunden ist, und daß eine andere Wicklung des Übertragers mit einem Ende am Bezugspotential und mit dem anderen Ende an dem mit dem Sendekreis des Wohntelefons verbundenen Eingang des anderen Kompensationsverstärkers angeschaltet ist. Damit kann der Übertrager je nach Übertragungsrichtung zur phasengleichen oder phaseninversen Übertragung von Signalen verwendet werden.

Die Steuerschaltung für die Richtungsverstärker ist nach einer Ausgestaltung so ausgelegt, daß sie zwei an den Ausgängen der Kompensationsverstärker angeschaltete Gleichrichterschaltungen aufweist, die einen Komparator mit nachgeschalteter Kippschaltung ansteuern, daß die Kippschaltung und eine vom Sendekreis der Türstation angesteuerte Gleichrichterschaltung eine Verknüpfungsschaltung ansteuern, die die Verstärkung der Richtungsverstärker einstellt, wobei bei nichtgekippter Kippschaltung beide Richtungsverstärker auf Verstärkung Null gesetzt sind, während bei gekippter Kippstufe unabhängig vom Ausgangssignal der Gleichrichterschaltung der Richtungsverstärker zur Türstation auf volle Verstärkung und der Richtungsverstärker zum Wohntelefon auf reduzierte Verstärkung gesetzt sind und während bei nichtgekippter Kippschaltung und einem am Ausgang der Gleichrichterschaltung anstehendem Ausgangssignal der Richtungsverstärker zum Wohntelefon auf volle Verstärkung und der Richtungsverstärker zur Türstation auf reduzierte Verstärkung gesetzt sind.

Für die Übertragung von dem Wohntelefon zu der Türstation ist die Wirkung der Steuerschaltung so, daß beim Sprechen von dem Wohntelefon das Sprachsignal nicht invertiert dem mit dem Sendekreis des Wohntelefons in Verbindung stehenden Kompensationsverstärkers und über den Übertrager ebenfalls nicht invertiert auf den mit dem Sendekreis der Türstation in Verbindung stehenden Kompensationsverstärker übertragen werden, daß an dem Spannungsteiler die Ausgangssignale der Kompensationsverstärker addiert werden, daß die an den Ausgängen der Kompensationsverstärker angeschalteten Gleichrichterschaltungen unterschiedliche Spannungen an den Komparator abgeben, der dann die Kippschaltung kippt, und daß die von der Kippschaltung angesteuerte Verknüpfungsschaltung mit einem ersten Steuersignal die Verstärkung der Richtungsverstärker so steuert, daß der Richtungsverstärker zur Türstation auf volle Verstärkung und der Richtungsverstärker zum Wohntelefon auf reduzierte Verstärkung gesetzt sind, während für die Gegenrichtung von der Türstation zu dem Wohntelefon vorgesehen ist, daß beim Sprechen von der Türstation über den Übertrager das Sprachsignal nicht invertiert auf den mit dem Sendekreis der Türstation in Verbindung stehenden Kompensationsverstärker und invertiert auf den mit dem Sendekreis des Wohntelefons in Verbindung stehenden Kompensationsverstärker übertragen werden, daß an den Ausgängen der Kompensationsverstärker gleich große Ausgangssignale anstehen, die über die Gleichrichterschaltungen dem Komparator zugeführt werden, daß der Komparator die Kippschaltung nicht kippt, und daß die Verknüpfungsschaltung bei nicht gekippter Kippschaltung und gleichzeitig anstehendem Ausgangssignal an der Gleichrichterschaltung mit einem zweiten Steuersignal die Verstärkung der Richtungsverstärker so steuert, daß der Richtungsverstärker zur Türstation auf reduzierte Verstärkung und der Richtungsverstärker zum Wohntelefon auf volle Verstärkung gesetzt sind.

Die Erfindung wird anhand eines in den Zeichnungen dargestellten Ausführungsbeispiels näher erläutert. Es zeigt:
- Fig. 1: im Blockschaltbild eine Türsprechanlage nach der Erfindung beim Sprechen von dem Wohntelefon zur Türstation und
- Fig. 2: die Türsprechanlage nach Fig. 1 beim Sprechen von der Türstation zu dem Wohntelefon.

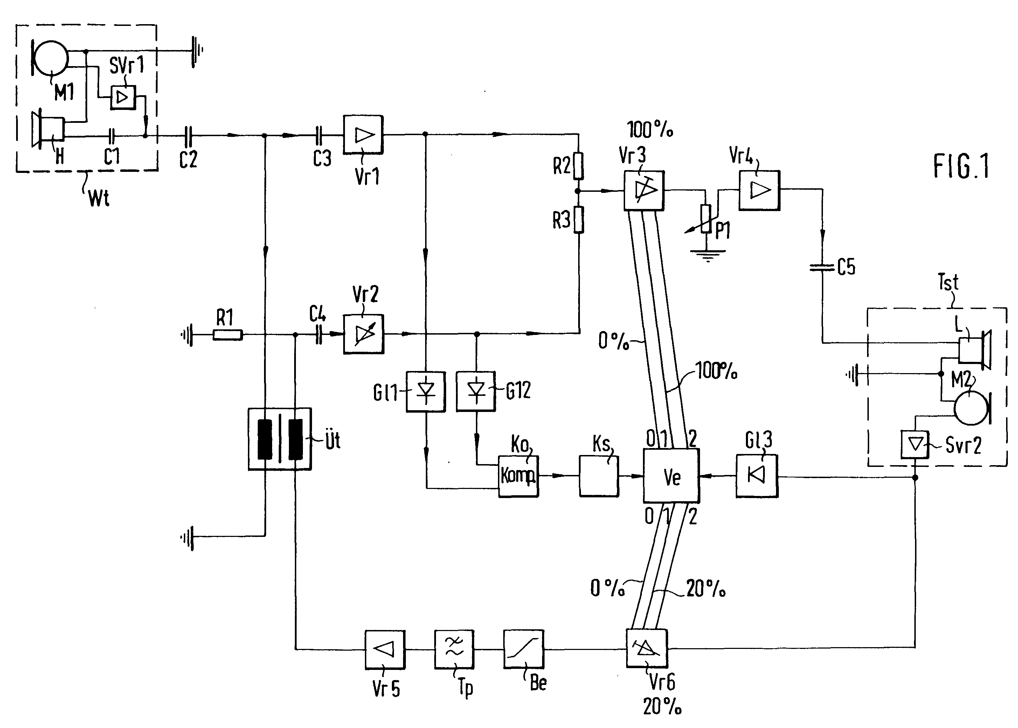

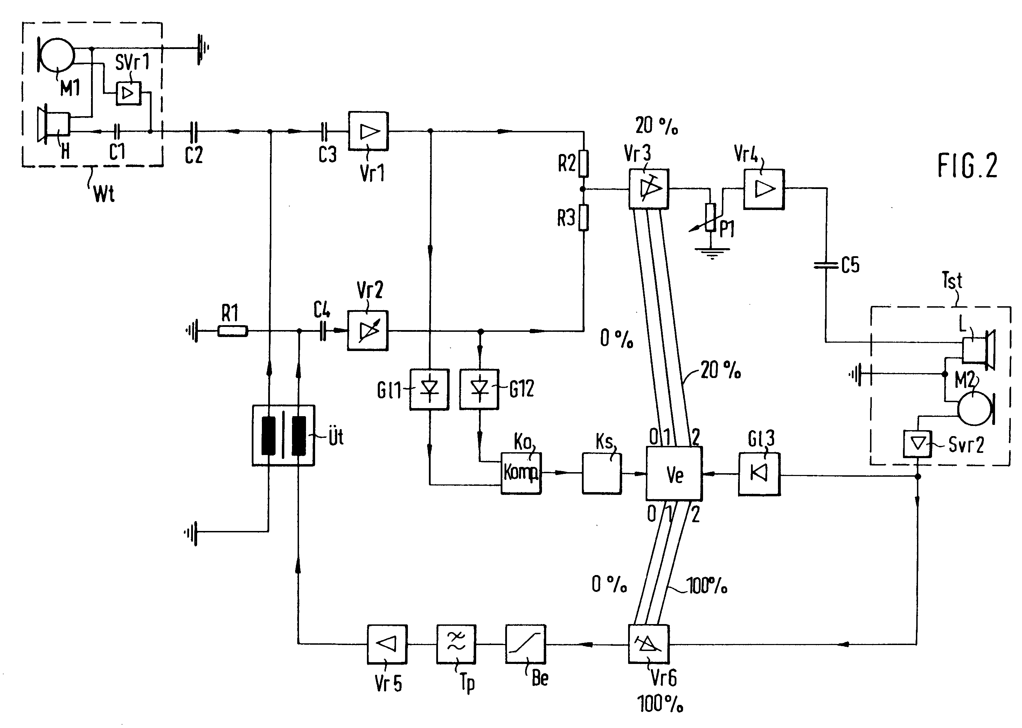

Die Blockschaltbilder nach Fig. 1 und 2 zeigen schematisch den Aufbau einer Türsprechanlage nach der Erfindung mit einem Wohntelefon Wt und einer Türstation Tst. Im Wohntelefon Wt wird der Sendekreis M1 durch ein Mikrofon gebildet, das über einen Sprechverstärker SVr1 und einen Koppelkondensator C2 mit der Sprechader verbunden ist. Der Empfangskreis des Wohntelefons Wt wird von einem Hörer H gebildet, der über einen Koppelkondensator C1 mit dem Ausgang des Sprechverstärkers SVr1 verbunden ist. In der Türstation Tst ist der Empfangskreis durch einen Lautsprecher L gebildet, der über einen Koppelkondensator C5 mit einer Verstärkerschaltung verbunden ist. Der Sendekreis M2 umfaßt ein Mikrofon und einen Sprechverstärker SVr2. Der Ausgang dieses Sprechverstärkers SVr2 führt zu der Verstärkerschaltung.

Nach dem, Koppelkondensator C2 ist an der Sprechader des Wohntelefons Wt das obere Ende einer Wicklung eines Übertragers Üt angeschaltet, die mit dem unteren Ende am Bezugspotential (Erde) liegt, an dem auch die Empfangs- und Sendekreise vom Wohntelefon Wt und von der Türstation Tst angeschaltet sind. Außerdem ist nach dem Koppelkondensator C2 auch ein zu einem Kompensationsverstärker Vr1 führender Koppelkondensator C3 angeschaltet. Die von der Türstation Tst kommende Sprechader führt über einen in der Verstärkung einstellbaren Richtungsverstärker Vr6, einen Begrenzer Be, einen Tießpaß Tp und einen Verstärker Vr5 auf das untere Ende der anderen Wicklung des Übertragers Üt. Das obere Ende der anderen Wicklung ist über einen Widerstand R1 mit dem Bezugspotential (Erde) und über einen Koppelkondensator C4 mit dem Eingang des anderen Kompensationsverstärkers Vr2 verbunden. Die beiden Kompensationsverstärker Vr1 und Vr2 speisen einen Spannungsteiler mit den Widerständen R2 und R3, an dessen Mittelabgriff der zur Türstation Tst gerichtete Richtungsverstärker Vr3 angeschaltet ist. Der Richtungsverstärker Vr3 speist ein Potentiometer P1, an dem die weiterführenden Sprachsignale abgegriffen und über den Verstärker Vr4 und den Koppelkondensator C5 dem Empfangskreis der Türstation Tst mit dem Lautsprecher L zugeführt werden.

An den Ausgängen der Kompensationsverstärker Vr1 und Vr2 sind die Gleichrichterschaltungen Gl1 und Gl2 angeschaltet, die einen Komparator Ko mit nachgeschalteter Kippschaltung Ks ansteuern. Die Kippschaltung Ks steuert eine Verknüpfungsschaltung Ve an, welche auch über eine Gleichrichterschaltung Gl3 beim Anstehen von Sprachsignalen des Sendekreises M2 der Türstation Tst angesteuert wird. Die Verknüpfungsschaltung Ve steuert die beiden Richtungsverstärker Vr3 und Vr6 auf die für die vorherrschende Übertragungsrichtung gewählten Verstärkungen, wie noch gezeigt wird. Zum einfacheren Verständnis sind drei Steuersignale 0, 1 und 2 angegeben, die den Richtungsverstärkern Vr3 und Vr6 von der Verknüpfungsschaltung Ve zugeführt werden. Die Realisierung kann auf verschiedene Art und Weise vorgenommen werden.

Wird weder am Wohntelefon Wt noch an der Türstation Tst gesprochen, dann liefern alle Gleichrichterschaltungen Gl1, Gl2 und Gl3 keine Ausgangssignale. Die Folge davon ist, daß der Komparator Ko die Kippschaltung Ks nicht ansteuert und kippt. Das fehlende Ausgangssignal der Kippschaltung Ks wird von der Verknüpfungsschaltung Ve zur Abgabe des Steuersignals 0 ausgenützt, mit dem beide Richtungsverstärker Vr3 und Vr6 auf Verstärkung Null eingestellt werden.

Wenn - wie Fig. 1 zeigt - an dem Wohntelefon Wt gesprochen wird, dann werden die Sprachsignale des Sendekreises M1 über die Koppelkondensatoren C2 und C3 dem Kompensationsverstärker Vr1 nicht invertiert zugeführt. Die Sprachsignale gelangen auch über den Übertrager Üt nicht invertiert zum Kompensationsverstärker Vr2, wobei durch den Widerstand R1 eine Spannungsteilung erfolgt. An den Ausgängen der Gleichrichterschaltungen Gl1 und Gl2 stehen unterschiedlich hohe Ausgangssignale an. Der Komparator Ko spricht auf die unterschiedlich hohen Ausgangssignale der Gleichrichterschaltungen Gl1 und Gl2 an, so daß die Kippschaltung Ks gekippt wird. Die Verknüpfungsschaltung Ve gibt darauf das Steuersignal 1 ab und zwar unabhängig davon, ob von der Gleichrichterschaltung Gl3 ein Ausgangssignal abgegeben wird oder nicht, d.h. unabhängig davon, ob an der Türstation Tst gesprochen wird oder nicht. Dies bedeutet, daß der Übertragungsrichtung vom Wohntelefon Wt zur Türstation Tst stets die Priorität eingeräumt ist.

Mit dem Steuersignal 1 wird der Richtungsverstärker Vr3 auf volle Verstärkung (100 %) eingestellt, so daß die Sprachsignale des Wohntelefons Wt am Empfangskreis mit dem Lautsprecher L mit ausreichender Lautstärke abgestrahlt werden. Das Steuersignal 1 steuert den Richtungsverstärker Vr6 zum Wohntelefon Wt auf eine reduzierte Verstärkung, z.B. von 20 %. Damit ist ein absolut rückkopplungsfreier Sprechverkehr garantiert, wobei die Übertragungsrichtung von der Türstation Tst zum Wohntelefon Wt benachteiligt ist, aber immer noch die Möglichkeit eines Gegensprechens beinhaltet.

Wenn - wie Fig. 2 zeigt - an der Türstation Ts gesprochen wird, dann bleibt die Übertragungsrichtung vom Wohntelefon Wt zur Türstation Tst solange bevorzugt, bis an dem Wohntelefon Wt nicht mehr gesprochen wird. Die Sprachsignale des Sendekreises M2 der Türstation Tst gelangen über den Richtungsverstärker Vr6, den Begrenzer Be, den Tiefpaß Tp und den Verstärker Vr5 auf die mit dem Kompensationsverstärker Vr2 in Verbindung stehende Wicklung des Übertragers Üt. Die Sprachsignale werden über den Koppelkondensator C4 nicht invertiert dem Kompensationsverstärker Vr2 zugeführt. Die andere Wicklung des Übertragers Üt überträgt die Sprachsignale über den Koppelkondensator C3 invertiert auf den Kompensationsverstärker Vr1 und auf den Empfangskreis des Wohntelefons Wt mit dem Hörer H. Da über den Widerstand R1 in dieser Übertragungsrichtung keine Spannungsteilung erfolgt, stehen an den Ausgängen der Kompensationsverstärker Vr1 und Vr2 nahezu gleich große, jedoch um 180° phasenverschobene Ausgangssignale.

Die Gleichrichterschaltungen Gl1 und Gl2 geben gleich große Ausgangssignale an den Komparator Ko ab, der daher nicht anspricht und die Kippschaltung Ks nicht ansteuert. Die Kippschaltung Ks steuert die Verknüpfungsschaltung Ve nicht an. Das Ausgangssignal der Gleichrichterschaltung Gl3 steuert die Verknüpfungsschaltung Ve jedoch an, so daß diese das Steuersignal 2 abgibt. Der Richtungsverstärker Vr6 wird auf volle Verstärkung (100 %) eingestellt, während der Richtungsverstärker Vr3 auf reduzierte Verstärkung, von z.B. 20 %, eingestellt wird. Damit wird in der Übertragungsrichtung von der Türstation Tst zum Wohntelefon Wt eine ausreichende Lautstärke bei rückkopplungsfreiem Betrieb erreicht und der Übertragungsrichtung von dem Wohntelefon Wt zur Türstation Tst verbleibt die Möglichkeit eines, wenn auch durch die reduzierte Verstärkung des zugeordneten Richtungsverstärkers beeinträchtigten Gegensprechens. Nach dem Ende des Gesprächs gehen die Richtungsverstärker Vr3 und Vr6 in jedem Falle auf die Verstärkung Null zurück.

## Patentansprüche

1. Türsprechanlage mit einer einen Empfangs- und einen Sendekreis aufweisenden Türstation und mindestens einer mit einem Sende- und Empfangskreis versehenen Wohntelefon, bei der eine Sprechverbindung zwischen der Türstation und dem Wohntelefon sowie von dem Wohntelefon zur Türstation über eine gemeinsame Bezugsader Erde, und eine Sprechader geführt ist, bei der die von den Sendekreisen der Türstation und dem Wohntelefon ausgehenden Sprechströme mittels einer Verstärkerschaltung mit zwei Richtungsverstärkern verstärkt werden, und bei der die Verstärkerschaltung zwei Kompensationsverstärker aufweist, deren Eingänge mit dem Sprechkreis der Türstation bzw. dem Sprechkreis des Wohntelefons in Verbindung stehen und die um 180° phasenverschobene Ausgangsspannungen einem Spannungsteiler zuführen, an dem eine Kompensation der von dem Wohntelefon rückgekoppelten Spannungen für den Empfangskreis der Türstation vorgenommen wird,
**dadurch gekennzeichnet,**
**daß** in der Ausgangsstellung der Türsprechanlage beide Richtungsverstärker (Vr3, Vr6) auf Verstärkung Null eingestellt sind,
**daß** beim Sprechen an dem Wohnungstelefon (Wt) eine Steuerschaltung unabhängig vom Anstehen einer vom Sendekreis (M2) der Türstation (Tst) kommenden Sprechspannung den zur Türstation (Tst) gerichteten Richtungsverstärker (Vr3) auf volle Verstärkung, d.h. 100 %, und den zum Wohntelefon (Wt) gerichteten Richtungsverstärker (Vr6) auf eine reduzierte Verstärkung, z.B. 20 %, einstellt und
**daß** die Steuerschaltung nur bei fehlender, vom Sendekreis (M1) des Wohntelefons (Wt) kommender Sprechspannung und beim gleichzeitigen Anstehen einer vom Sendekreis (M2) der Türstation kommenden Sprechspannung den zum Wohntelefon (Wt) gerichteten Richtungsverstärker (Vr6) auf volle Verstärkung, d.h. 100 %, und den zur Türstation (Tst) gerichteten Richtungsverstärker (Vr3) auf eine reduzierte Verstärkung, z.B. 20 %, einstellt.

2. Türsprechanlage nach Anspruch 1,
**dadurch gekennzeichnet,**
**daß** der Ausgang des mit dem Sendekreis (M2) der Türstation (Tst) verbundenen Richtungsverstärker (Vr6) über einen Begrenzer (Be), einen Tiefpaß (Tp) und einen Verstärker (Vr5) mit einer Wicklung eines Übertragers (Üt) verbunden ist, deren anderes Ende mit dem Eingang des mit dem Sendekreis (M2) der Türstation (Tst) in Verbindung stehenden Kompensationsverstärkers (Vr2) und einem am Bezugspotential, Erde, liegenden Widerstands (R2) verbunden ist, und
**daß** eine andere Wicklung des Übertragers (Üt) mit einem Ende am Bezugspotential, Erde, und mit dem anderen Ende an dem mit dem Sendekreis (M1) des Wohntelefons (Wt) verbundenen Eingang des anderen Kompensationsverstärkers (Vr1) angeschaltet ist.

3. Türsprechanlage nach Anspruch 1 oder 2,
**dadurch gekennzeichnet,**
**daß** die Steuerschaltung zwei an den Ausgängen der Kompensationsverstärker (Vr1, Vr2) angeschaltete Gleichrichterschaltungen (Gl1, Gl2) aufweist, die einen Komparator (Ko) mit nachgeschalteter Kippschaltung (Ks) ansteuern,
**daß** die Kippschaltung (Ks) und eine vom Sendekreis (M2) der Türstation (Tst) angesteuerte Gleichrichterschaltung (Gl3) eine Verknüpfungsschaltung (Ve) ansteuern, die die Verstärkung der Richtungsverstärker (Vr3, Vr6) einstellt, wobei bei nichtgekippter Kippschaltung (Ks) beide Richtungsverstärker (Vr3, Vr6) auf Verstärkung Null gesetzt sind, während bei gekippter Kippstufe (Ks) unabhängig vom Ausgangssignal der Gleichrichterschaltung (Gl3) der Richtungsverstärker (Vr3) zur Türstation (Tst) auf volle Verstärkung, d.h. 100 %, und der Richtungsverstärker (Vr6) zum Wohntelefon (Wt) auf reduzierte Verstärkung, z.B. 20 %, gesetzt sind und während bei nichtgekippter Kippschaltung (Ks) und einem am Ausgang der Gleichrichterschaltung (Gl3) anstehendem Ausgangssignal der Richtungsverstärker (Vr6) zum Wohntelefon (Wt) auf volle Verstärkung, d.h. 100 %, und der Richtungsverstärker (Vr3) zur Türstation (Tst) auf reduzierte Verstärkung z.B. 20 % gesetzt sind.

4. Türsprechanlage nach Anspruch 3,
**dadurch gekennzeichnet,**
**daß** beim Sprechen von dem Wohntelefon (Wt) das Sprachsignal nicht invertiert dem mit dem Sendekreis (M1) des Wohntelefons (Wt) in Verbindung stehenden Kompensationsverstärkers (Vr1) und über den Übertrager (Üt) ebenfalls nicht invertiert auf den mit dem Sendekreis (M2) der Türstation (Tst) in Verbindung stehenden Kompensationsverstärker (Vr2) übertragen werden,
**daß** an dem Spannungsteiler (R2, R3) die Ausgangssignale der Kompensationsverstärker (Vr1, Vr2) addiert werden,
**daß** die an den Ausgängen der Kompensationsverstärker (Vr1, Vr2) angeschalteten Gleichrichterschaltungen (Gl1, Gl2) unterschiedliche Spannungen an den Komparator (Ko) abgeben, der dann die Kippschaltung (Ks) kippt, und
**daß** die von der Kippschaltung (Ks) angesteuerte Verknüpfungsschaltung (Ve) mit einem ersten Steuersignal (1) die Verstärkung der Richtungsverstärker (Vr3, Vr6) so steuert, daß der Richtungsverstärker (Vr3) zur Türstation (Tst) auf volle Verstärkung, d.h. 100 %, und der Richtungsverstärker (Vr6) zum Wohntelefon (Wt) auf reduzierte Verstärkung, z.B. 20 %, gesetzt sind.

5. Türsprechanlage nach Anspruch 3 oder 4,
**dadurch gekennzeichnet,**
**daß** beim Sprechen von der Türstation (Tst) über den Übertrager (Üt) das Sprachsignal nicht invertiert auf den mit dem Sendekreis (M2) der Türstation (Tst) in Verbindung stehenden Kompensationsverstärker (Vr2) und invertiert auf den mit dem Sendekreis (M1) des Wohntelefons (Wt) in Verbindung stehenden Kompensationsverstärker (Vr1) übertragen werden,
**daß** an den Ausgängen der Kompensationsverstärker (Vr1, Vr2) gleich große Ausgangssignale anstehen, die über die Gleichrichterschaltungen (Gl1, Gl2) dem Komparator (Ko) zugeführt werden,
**daß** der Komparator (Ko) die Kippschaltung (Ks) nicht kippt, und
**daß** die Verknüpfungsschaltung (Ve) bei nicht gekippter Kippschaltung (Ks) und gleichzeitig anstehendem Ausgangssignal an der Gleichrichterschaltung (Gl3) mit einem zweiten Steuersignal (2) die Verstärkung der Richtungsverstärker (Vr3, Vr6) so steuert, daß der Richtungsverstärker (Vr3) zur Türstation (Tst) auf reduzierte Verstärkung, z.B. 20 %, und der Richtungsverstärker (Vr6) zum Wohntelefon (Wt) auf volle Verstärkung, d.h. 100 %, gesetzt sind.

## Claims

1. Door intercom system, having a door station, which includes a receiving circuit and a transmitting circuit, and at least one domestic telephone, which is provided with a transmitting and receiving circuit, wherein a voice communication is established between the door station and the domestic telephone as well as from the domestic telephone to the door station via a common reference wire, earth, and via a speaking wire, wherein the speech currents, which extend from the transmitting circuits of the door station and from the domestic telephone, are amplified by means of an amplifier circuit having two directional amplifiers, and wherein the amplifier circuit has two compensation amplifiers, the inputs of which communicate with the speaking circuit of the door station, or respectively with the speaking circuit of the domestic telephone, and supply the output voltages, which are 180° out-of-phase, to a voltage divider where the voltages, which are fed-back from the domestic telephone, for the receiving circuit of the door station are compensated-for, **characterised in that**, when the door intercom system is in its initial position, the two directional amplifiers (Vr3, Vr6) are set to the amplification zero, **in that**, when speaking on the domestic telephone (Wt), independently of the presence of a speech voltage which comes from the transmitting circuit (M2) of the door station (Tst), a control circuit sets the directional amplifier (Vr3), which is directed towards the door station (Tst), to full amplification, i.e. 100 %, and sets the directional amplifier (Vr6), which is directed towards the domestic telephone (Wt), to a reduced amplification, e.g. 20 %, and **in that** the control circuit sets the directional amplifier (Vr6), which is directed towards the domestic telephone (Wt), to full amplification, i.e. 100 %, and sets the directional amplifier (Vr3), which is directed towards the door station (Tst), to a reduced amplification, e.g. 20 %, only if there is no speech voltage coming from the transmitting circuit (M1) of the domestic telephone (Wt), and if there is the simultaneous presence of a speech voltage coming from the transmitting circuit (M2) of the door station.

2. Door intercom system according to claim 1, **characterised in that** the output of the directional amplifier (Vr6), which is connected to the transmitting circuit (M2) of the door station (Tst), is connected to a winding of a transmitter (Üt) via a limiter (Be), a low-pass filter (Tp) and an amplifier (Vr5), the other end of said winding being connected to the input of the compensation amplifier (Vr2), which communicates with the transmitting circuit (M2) of the door station (Tst), and to a resistor (R2), which lies at the reference potential, earth, and **in that** another winding of the transmitter (Üt) is connected by one end to the reference potential, earth, and by the other end to the input of the other compensation amplifier (Vr1) connected to the transmitting circuit (M1) of the domestic telephone (Wt).

3. Door intercom system according to claim 1 or 2, **characterised in that** the control circuit has two rectifier circuits (Gl1, GI2), which are connected to the outputs of the compensation amplifiers (Vr1, Vr2), and which rectifier circuits actuate a comparator (Ko) with a subsequently added trigger circuit (Ks), **in that** the trigger circuit (Ks) and a rectifier circuit (GI3). which is actuated by the transmitting circuit (M2) of the door station (Tst), actuate a combinational switching circuit (Ve) which sets the amplification of the directional amplifiers (Vr3, Vr6), the two directional amplifiers (Vr3, Vr6) being set to the amplification zero with a non-triggered trigger circuit (Ks), while, with a triggered trigger stage (Ks) independently of the output signal of the rectifier circuit (Gl3), the directional amplifier (Vr3) directed towards the door station (Tst) is set to full amplification, i.e. 100 %, and the directional amplifier (Vr6) directed towards the domestic telephone (Wt) is set to reduced amplification, e.g. 20 %, and while, with a non-triggered trigger circuit (Ks) and with an output signal present at the output of the rectifier circuit (Gl3), the directional amplifier (Vr6) directed towards the domestic telephone (Wt) is set to full amplification, i.e. 100 %, and the directional amplifier (Vr3) directed towards the door station (Tst) is set to reduced amplification, e.g. 20 %.

4. Door intercom system according to claim 3, **characterised in that**, when speaking from the domestic telephone (Wt), the speech signal is transmitted in a non-inverted manner to the compensation amplifier (Vr1), which communicates with the transmitting circuit (M1) of the domestic telephone (Wt), and via the transmitter (Üt), also in a non-inverted manner, to the compensation amplifier (Vr2), which communicates with the transmitting circuit (M2) of the door station (Tst), **in that** the output signals of the compensation amplifiers (Vr1, Vr2) are added to the voltage divider (R2, R3), **in that** the rectifier circuits (Gl1, Gl2), which are connected to the outputs of the compensation amplifiers (Vr1, Vr2), give different voltages to the comparator (Ko), which then triggers the trigger circuit (Ks), and **in that** the combinational switching circuit (Ve), which is actuated by the trigger circuit (Ks), controls the amplification of the directional amplifiers (Vr3, Vr6) with a first control signal (1) so that the directional amplifier (Vr3) directed towards the door station (Tst) is set to full amplification, i.e. 100 %, and the directional amplifier (Vr6) directed towards the domestic telephone (Wt) is set to reduced amplification, e.g. 20 %.

5. Door intercom system according to claim 3 or 4, **characterised in that**, when speaking from the door station (Tst) via the transmitter (Üt), the speech signal is transmitted in a non-inverted manner to the compensation amplifier (Vr2), which communicates with the transmitting circuit (M2) of the door station (Tst), and is transmitted in an inverted manner to the compensation amplifier (Vr1), which communicates with the transmitting circuit (M1) of the domestic telephone (Wt), **in that** output signals of identical magnitude occur at the outputs of the compensation amplifiers (Vr1, Vr2), and said signals are supplied to the comparator (Ko) via the rectifier circuits (Gl1, Gl2), **in that** the comparator (Ko) does not trigger the trigger circuit (Ks), and **in that** the combinational switching circuit (Ve), with a non-triggered trigger circuit (Ks) and with a simultaneously occurring output signal at the rectifier circuit (Gl3), controls the amplification of the directional amplifiers (Vr3, Vr6) with a second control signal (2) so that the directional amplifier (Vr3) directed towards the door station (Tst) is set to reduced amplification, e.g. 20 %, and the directional amplifier (Vr6) directed towards the domestic telephone (Wt) is set to full amplification, i.e. 100 %.

## Revendications

1. Interphone avec une station de porte présentant un circuit de réception et un circuit d'émission et au moins un téléphone d'habitation muni d'un circuit d'émission et de réception, dans lequel une communication vocale entre la station de porte et le téléphone d'habitation ainsi qu'entre le téléphone d'habitation avec la station de porte est conduite par l'intermédiaire d'un conducteur de référence commun, terre, et un conducteur de conversation, dans lequel les courants de conversation sortant des circuits d'émission de la station de porte et du téléphone d'habitation sont amplifiés au moyen d'un montage amplificateur à deux amplificateurs directifs et dans lequel le montage amplificateur présente deux amplificateurs de compensation dont les entrées sont en liaison avec le circuit vocal de la station de porte ou respectivement avec le circuit vocal du téléphone d'habitation et qui amènent des tensions de sortie en déphasage de 180° à un diviseur de tension auquel est effectuée une compensation des tensions réinjectées par le téléphone d'habitation pour le circuit de réception de la station de porte,
**caractérisé en ce**
**que**, dans la position de départ de l'interphone, les deux amplificateurs directifs (Vr3, Vr6) sont réglés à une amplification nulle,
**que**, lors d'une conversation au téléphone d'habitation (Wt), un circuit de commande, indépendamment de la présence d'une tension de conversation venant du circuit d'émission (M2) de la station de porte (Tst), règle l'amplificateur directif (Vr3) dirigé vers la station de porte (Tst) à une pleine amplification, c'est-à-dire 100 %, et l'amplificateur directif (Vr6) dirigé vers le téléphone d'habitation (Wt) à une amplification réduite, par exemple 20 %, et
**que** le circuit de commande ne règle l'amplificateur directif (Vr6) dirigé vers le téléphone d'habitation (Wt) à une pleine amplification, c'est-à-dire 100 %, et l'amplificateur directif (Vr3) dirigé vers la station de porte (Tst) à une amplification réduite, par exemple 20 %, que en l'absence d'une tension de conversation venant du circuit d'émission (M1) du téléphone d'habitation (Wt) et en présence simultanée d'une tension de conversation venant du circuit d'émission (M2) de la station de porte.

2. Interphone selon la revendication 1,
**caractérisé en ce**
**que** la sortie de l'amplificateur directif (Vr6) reliée au circuit d'émission (M2) de la station de porte (Tst) est reliée, par l'intermédiaire d'un limiteur (Be), d'un passe-bas (Tp) et d'un amplificateur (Vr5), à une bobine d'un répétiteur (Üt) dont l'autre extrémité est reliée à l'entrée de l'amplificateur de compensation (Vr2) qui est en liaison avec le circuit d'émission (M2) de la station de porte (Tst) et à une résistance (R2) se trouvant au potentiel de référence, terre, et
**qu'**une autre bobine du répétiteur (Üt) est relié par une extrémité au potentiel de référence, terre, et par l'autre extrémité à l'entrée de l'autre amplificateur de compensation (Vr1) reliée au circuit d'émission (M1) du téléphone d'habitation (Wt).

3. Interphone selon la revendication 1 ou 2,
**caractérisé en ce**
**que** le circuit de commande présente deux circuits redresseurs (Gl1, Gl2), branchés sur les sorties des amplificateurs de compensation (Vr1, Vr2), qui commandent un comparateur (Ko) avec un circuit basculeur (Ks) intercalé à la suite,
**que** le circuit basculeur (Ks) et un circuit redresseur (GI3) commandé par le circuit d'émission (M2) de la station de porte (Tst) commandent un circuit combinatoire (Ve) qui règle l'amplification des amplificateurs directifs (Vr3, Vr6), les deux amplificateurs directifs (Vr3, Vr6) étant fixés à une amplification nulle dans le cas où le circuit basculeur (Ks) n'est pas basculé tandis que, dans le cas où le circuit basculeur (Ks) est basculé, l'amplificateur directif (Vr3) vers la station de porte (Tst) est fixé à une pleine amplification, c'est-à-dire 100 %, et l'amplificateur directif (Vr6) vers le téléphone d'habitation (Wt) à une amplification réduite, par exemple 20 %, indépendamment du signal de sortie du circuit redresseur (Gl3) et tandis que, dans le cas où le circuit basculeur (Ks) n'est pas basculé et de l'existence d'un signal de sortie à la sortie du circuit redresseur (Gl3), l'amplificateur directif (Vr6) vers le téléphone d'habitation (Wt) est fixé à une pleine amplification, c'est-à-dire 100 %, et l'amplificateur directif (Vr3) vers la station de porte (Tst) à une amplification réduite, par exemple 20 %.

4. Interphone selon la revendication 3,
**caractérisé en ce**
**que**, dans le cas d'une conversation depuis le téléphone d'habitation (Wt), le signal de conversation est transmis non inversé à l'amplificateur de compensation (Vr1) qui est en liaison avec le circuit d'émission (M1) du téléphone d'habitation (Wt) et, par l'intermédiaire du répétiteur (Üt), également non inversé à l'amplificateur de compensation (Vr2) qui est en liaison avec le circuit d'émission (M2) de la station de porte (Tst),
**que** les signaux de sortie des amplificateurs de compensation (Vr1, Vr2) sont additionnés au diviseur de tension (R2, R3),
**que** les circuits redresseurs (Gl1, Gl2) branchés sur les sorties des amplificateurs de compensation (Vr1, Vr2) délivrent des tensions différentes au comparateur (Ko) qui fait ensuite basculer le circuit basculeur (Ks) et
**que** le circuit combinatoire (Ve) commandé par le circuit basculeur (Ks) commande l'amplification des amplificateurs directifs (Vr3, Vr6) par un premier signal de commande (1) de telle manière que l'amplificateur directif (Vr3) vers la station de porte (Tst) est fixé à une pleine amplification, c'est-à-dire 100%, et l'amplificateur directif (Vr6) vers le téléphone d'habitation (Wt) à une amplification réduite, par exemple 20 %.

5. Interphone selon la revendication 3 ou 4,
**caractérisé en ce**
**que**, dans le cas d'une conversation depuis la station de porte (Tst),le signal de conversation est transmis, par l'intermédiaire du répétiteur (Üt), non inversé à l'amplificateur de compensation (Vr2) qui se trouve en liaison avec le circuit d'émission (M2) de la station de porte (Tst) et inversé à l'amplificateur de compensation (Vr1) qui se trouve en liaison avec le circuit d'émission (M1) du téléphone d'habitation (Wt),
**que** des signaux de sortie de même grandeur sont présents aux sorties des amplificateurs de compensation (Vr1, Vr2) et sont amenés au comparateur (Ko) par l'intermédiaire des circuits redresseurs (Gl1, Gl2),
**que** le comparateur (Ko) ne fait pas basculer le circuit basculeur (Ks) et
**que** le circuit combinatoire (Ve) commande l'amplification des amplificateurs directifs (Vr3, Vr6), dans le cas où le circuit basculeur (Ks) n'est pas basculé et où un signal de sortie est simultanément présent au circuit redresseur (Gl3), par un second signal de commande (2) de telle manière que l'amplificateur directif (Vr3) vers la station de porte (Tst) est fixé à une amplification réduite, par exemple 20 %, et l'amplificateur directif (Vr6) vers le téléphone d'habitation (Wt) à une pleine amplification, c'est-à-dire 100 %.
